# EUROPEAN PATENT APPLICATION

(11) **EP 4 760 752 A1**
(43) Date of publication of application: **17.06.2026**
(21) Application number: 25203531.6
(22) Date of filing: 22.09.2025
(51) Int. Cl.: H01B 3/30, H01B 3/42, H01B 7/02, H01B 7/18, H01B 13/14, H02K 3/30

(54) **INSULATED WIRE AND PREPARATION METHOD THEREOF, COIL AND ELECTRONIC/ELECTRICAL DEVICE**

(30) Priority: 11.12.2024 CN 202411815857
(71) Applicant: Well Ascent Electronic (Ganzhou) Co., Ltd., Ganzhou, Jiangxi 341000 (CN)
(72) Inventor: LI, Jian, Ganzhou (CN); ZHU, Yuejia, Ganzhou (CN); ZHU, Zuomao, Ganzhou (CN)
(74) Representative: Huang, Liwei

(57) **Abstract**

Provided are an insulated wire and a preparation method thereof, a coil and an electronic/electrical device. The insulated wire includes a conductor, and a base layer and an outer insulation layer arranged in sequence on an outer periphery of the conductor. The base layer and the outer insulation layer together serve as an insulation layer of the insulated wire. The base layer is made of phenolphthalein-based polyaryl ether ketone (PEK-C), and the outer insulation layer is obtained by blending polyether ether ketone (PEEK) and PEK-C. The insulated wire provided by the present invention introduces a base layer made of PEK-C between the metal conductor and the outer insulation layer, which can improve the adhesion between PEEK and copper, and reduce the risk of insulation delamination. The outer insulation layer is formed from a blended resin of PEEK and PEK-C.

## Description

### CROSS-REFERENCE TO RELATED APPLICATIONS

The present application claims the right of priority for Chinese Patent Application No. 202411815857.9, filed with the China National Intellectual Property Administration on December 11, 2024, which is incorporated herein by reference in its entirety.

### TECHNICAL FIELD

The present invention relates to the technical field of insulated wires, and in particular to an insulated wire and a preparation method thereof, a coil and an electronic/electrical device.

### BACKGROUND

Polyether ether ketone (PEEK) is a thermoplastic high-performance polymer known for its exceptional mechanical properties, outstanding chemical resistance, and excellent electrical insulation characteristics. Especially in the field of electrical engineering, PEEK is often considered a material for wire insulation due to its superior electrical insulation properties and high operating temperature range. However, in the practical application of PEEK as an insulating material for electrical wires, some problems have been encountered, including poor adhesion between PEEK and metal conductors. This poor adhesion not only affects the mechanical strength of the product, but also increases the risk of insulation layer delamination during use, thereby affecting the safe operation of electrical equipment.

Phenolphthalein-based polyaryl ether ketone (PEK-C), an amorphous polymer in the polyaryl ether ketone (PAEK) family, exhibits high thermal resistance, high strength, high modulus, and excellent dimensional stability. In addition, PEK-C has good electrical insulation, corrosion resistance, radiation resistance, and self-extinguishing properties, as well as outstanding fatigue resistance, making it an ideal candidate for various high-performance applications, especially, PEK-C shows superior tribological properties compared with PEEK.

Although PEK-C has many advantages, there are few research reports in the prior art on combining it with PEEK for improving the performance of insulated wires.

Therefore, the present invention aims to provide a novel solution based on the synergistic effect between PEEK and PEK-C to solve the aforementioned technical problems associated with traditional PEEK-insulated wires.

### SUMMARY

In view of the foregoing defects, the present invention aims to provide a novel insulated wire to solve the problems of poor adhesion between PEEK resin and a conductor, as well as insufficient flexibility of the insulation layer in the prior art.

To achieve the above objectives, the present invention provides the following technical solutions:

Phenolphthalein-based polyaryl ether ketone (PEK-C) has a repeating structural unit as shown in Formula 1:

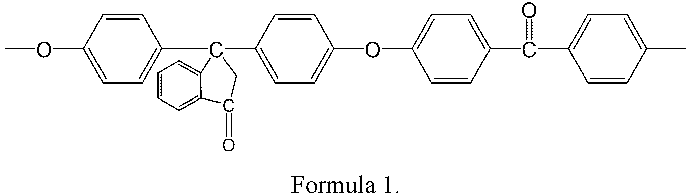

The PEK-C may be a commercially available product, such as the PEK-C (with an Mw of approximately 52,000) produced by Xuzhou Engineering Plastics Factory, China Changchun Institute of Applied Chemistry Chinese Academy of Sciences.

Alternatively, PEK-C may be synthesized in the laboratory. Phenolphthalein and dichlorobenzophenone are mixed in an equivalent ratio in a mixed solvent of N,N-Dimethylacetamide (DMAC) and ethylbenzene. Under alkaline catalytic conditions, the mixture is subjected to a reaction at a gradually increased temperature from 150°C to 200°C for 2 h. After reaction, a viscosity of the system is about 1.1 dL/g, and a weight-average molecular weight (Mw) is about 50,000.

According to a first aspect, the present invention provides an insulated wire including a conductor, and a base layer and an outer insulation layer arranged in sequence on an outer periphery of the conductor, where the base layer is made of PEK-C.

In the present invention, a thickness of the base layer along an outward direction from the conductor is not greater than 10 µm, and preferably, the thickness of the base layer is 5-10 µm.

In order to obtain better flexibility of the outer insulation layer, the outer insulation layer is made of blend resin obtained by melt blending and pelletizing polyether ether ketone (PEEK) and phenolphthalein-based polyaryl ether ketone (PEK-C), where a mass ratio of PEK-C is not greater than 50%.

A crystallinity of the blended resin of the outer insulation layer is not less than 10%, and the crystallinity of the blended resin of the outer insulation layer is 10-28%. In the present invention, PEK-C is in an amorphous state. In the PEEK/PEK-C blend, the PEEK and the PEK-C have good compatibility. The inclusion of PEK-C reduces the crystallinity of PEEK, thereby improving the overall flexibility of the material.

According to a second aspect, the present invention provides a preparation method of the insulated wire described above, and the insulated wire is prepared by extrusion, with specific steps as follows:

heating resin of a base layer to a temperature of 370-400°C to achieve a molten state, and extruding a resin material of the base layer through a first flow channel of a screw extruder to form a uniform coating over a copper conductor, thereby obtaining a core wire; and then heating resin of an outer insulation layer to a temperature of 370-400°C to achieve a molten state, and extruding a resin material of the outer insulation layer through a second flow channel of the screw extruder to form a uniform coating over the core wire, and obtaining the insulated wire after cooling.

The present invention also provides a coil formed from the insulated wire described above.

The present invention further provides an electrical or electronic device prepared from the coil described above.

According to a fifth aspect, the present invention provides a co-extrusion mold for processing the insulated wire, where the mold includes a die core, a conductor feed channel is formed through a center of the die core, and a first flow channel and a second flow channel are formed in sequence around an outer periphery of the conductor feed channel, which are annular and arranged concentrically with the conductor feed channel. Longitudinal cross-sections of the first flow channel and the second flow channel are trumpet-shaped, including an inclined section and a horizontal section parallel to the conductor feed channel. A conductor for the insulated wire is fed from a front end to a rear end of the die core through the conductor feed channel. A resin material at a bottom layer in a molten state flows in through the inclined section of the first flow channel, then flows out through the horizontal section of the first flow channel, and is coated onto an outer periphery of the conductor to form a base layer of the insulated wire. At the same time, a resin material for an outer insulation layer in a molten state flows in through the inclined section of the second flow channel, then flows out through the horizontal section of the second flow channel, and is coated onto an outer periphery of the base layer, forming an outer insulation layer of the insulated wire. Upon cooling, the insulated wire is formed.

The mold for processing the insulated wire provided by the present invention enables simultaneous formation of both the base layer and the outer insulation layer on the conductor without preheating the conductor many times, thereby improving the production and processing efficiency.

Compared with the prior art, the present invention has the following advantages:

The insulated wire provided by the present invention introduces a base layer made of PEK-C between the metal conductor and the outer insulation layer, which can improve the adhesion between PEEK and copper, and reduce the risk of insulation delamination or breakage. In addition, blending PEK-C into the outer insulation layer made of PEEK can improve bonding strength with the base layer and reduce overall crystallinity, thereby enhancing the flexibility of the wire. Due to the low friction coefficient of PEK-C, the insulated wire can exhibit a lower static friction coefficient, which facilitates insertion into the stator.

### BRIEF DESCRIPTION OF THE DRAWINGS

FIG. 1 is a structural diagram of a mold used for processing an insulated wire according to present invention.
FIG. 2 is a schematic structural diagram of a side cross-sectional structure of an insulated wire according to the present invention.

Reference numerals in the accompanying drawings:
1. die core; 2. conductor feed channel; 3. first flow channel; 4. second flow channel; 5. inclined section; 6. horizontal section; 10. conductor; 20. base layer; and 30. outer insulation layer.

### DETAILED DESCRIPTION OF EMBODIMENTS

Many specific details are set forth in the following description to facilitate thorough understanding of the present invention. However, the present invention may be implemented in many other ways different from those described herein, similar improvements may be made by those skilled in the art without departing from the connotation of the present invention, and therefore the present invention is not limited by the specific embodiments disclosed below.

Unless otherwise defined, all technical and scientific terms mentioned herein have the same meaning as commonly understood by those skilled in the technical field of the present invention. Terms mentioned in the description of the present invention are used only for the purpose of describing specific embodiments, and are not intended to limit the present invention.

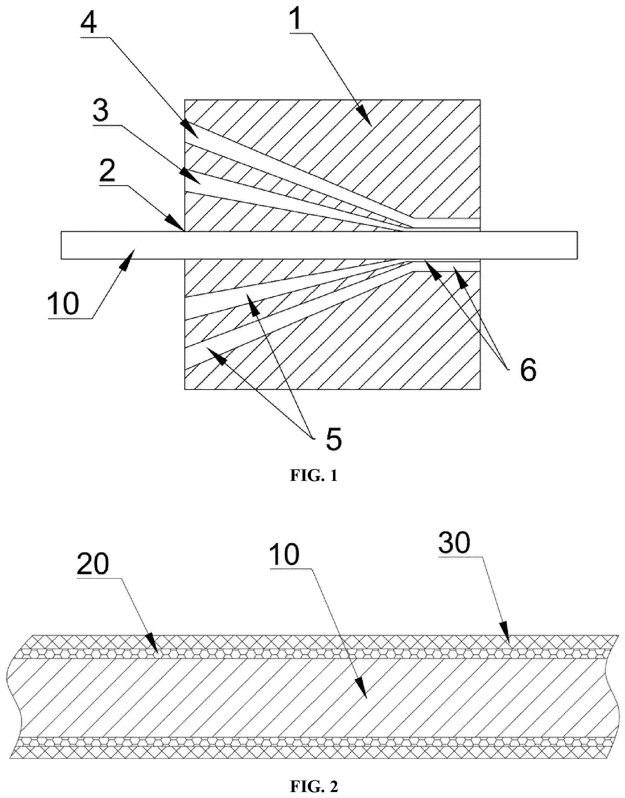

As shown in FIGs. 1 and 2, the present invention provides a mold for processing insulated wire. The mold includes a die core 1, a conductor feed channel 2 is formed through a center of the die core 1, and a first flow channel 3 and a second flow channel 4 are formed in sequence around an outer periphery of the conductor feed channel 2, which are annular and arranged concentrically with the conductor feed channel. Longitudinal cross-sections of the first flow channel 3 and the second flow channel 4 are trumpet-shaped, including an inclined section 5 and a horizontal section 6 parallel to the conductor feed channel 2. A conductor 10 for the insulated wire is fed from a front end to a rear end of the die core 1 through the conductor feed channel 2. A resin material at a bottom layer in a molten state flows in through the inclined section 5 of the first flow channel 3, then flows out through the horizontal section 6 of the first flow channel 3, and is coated onto an outer periphery of the conductor 10 to form a base layer 20 of the insulated wire. At the same time, a resin material for an outer insulation layer in a molten state flows in through the inclined section 5 of the second flow channel 4, then flows out through the horizontal section 6 of the second flow channel 4, and is coated onto an outer periphery of the base layer 20, forming an outer insulation layer 30 of the insulated wire. Upon cooling, the insulated wire is formed. Specifically, when the outer insulation layer is made of blended resin, the blended resin is prepared by blending PEEK pellets and PEK-C pellets using a twin-screw extruder under the temperature conditions of 370-400 °C to form a uniform mixture system, which is then cooled and pelletized into a pelletized polymeric material using a pelletizer.

### Example 1

This example provides an insulated wire, which was prepared by co-extrusion using the mold and the method described above. The insulated wire includes a metal conductor made of copper and an outer insulation layer wrapped around the copper conductor. The outer insulation layer includes two layers, that is, a base layer and an outermost insulation layer. The metal conductor was a metal flat wire having dimensions of 1.00 × 2.00 (mm). The base layer in contact with the conductor was made of phenolphthalein-based polyaryl ether ketone (PEK-C). The outer insulation layer is made of polyether ether ketone (PEEK). A preheating temperature of the conductor was 280-330 °C; an extrusion temperature of the PEK-C was 370-400 °C; and an extrusion temperature of the PEEK was 370-400 °C. A thickness of the base layer was 8 µm, and a thickness of the outer insulation layer made of the PEEK was 92 µm, that is, a total thickness of the insulation layer was 100 µm.

### Example 2

An insulated wire was prepared following the same method as in Example 1, except that a thickness of the base layer made of the PEK-C was 10 µm, and a thickness of the outer insulation layer made of the PEEK was 110 µm, that is, a total thickness of the insulation layer was 120 µm.

### Example 3

An insulated wire was prepared following the same method as in Example 1, except that a thickness of the base layer made of the PEK-C was 5 µm, and a thickness of the outer insulation layer made of the PEEK was 75 µm, that is, a total thickness of the insulation layer was 80 µm.

### Example 4

This example adopted the method in Example 1, in which the outer insulation layer was prepared by a blended material of PEEK and PEK-C. A preheating temperature of the conductor was 280-330 °C; an extrusion temperature of the PEK-C was 370-400 °C; and an extrusion temperature of the outer insulation layer was 370-400 °C. In the blended material, the PEK-C accounted for 10% by weight, and the remainder was PEEK. A thickness of the base layer made of PEK-C in an extruded wire was 10 µm, and a thickness of the outer insulation layer made of the PEEK was 110 µm, that is, a total thickness of the insulation layer was 120 µm.

### Example 5

This example adopted the method in Example 4, in which the outer insulation layer was prepared by a blended material of PEEK and PEK-C. In the blended material, the PEK-C accounted for 5% by weight, and the remainder was PEEK. A thickness of the base layer made of the PEK-C of the extruded wire was 10 µm, and a thickness of the outer insulation layer was 110 µm, that is, a total thickness of the insulation layer was 120 µm.

### Example 6

This example adopted the method in Example 4, in which the outer insulation layer was prepared by a blended material of PEEK and PEK-C. In the blended material, the PEK-C accounted for 20% by weight, and the remainder was PEEK. A thickness of the base layer made of the PEK-C of the extruded wire was 5 µm, and a thickness of the outer insulation layer was 75 µm, that is, a total thickness of the insulation layer was 80 µm.

### Example 7

This example adopted the method in Example 4, in which the outer insulation layer was prepared by a blended material of PEEK and PEK-C. In the blended material, the PEK-C accounted for 30% by weight, and the remainder was PEEK. A thickness of the base layer made of the PEK-C of the extruded wire was 8 µm, and a thickness of the outer insulation layer was 92 µm, that is, a total thickness of the insulation layer was 100 µm.

### Example 8

This example adopted the method in Example 4, in which the outer insulation layer was prepared by a blended material of PEEK and PEK-C. In the blended material, the PEK-C accounted for 40% by weight, and the remainder was PEEK. A thickness of the base layer made of the PEK-C of the extruded wire was 10 µm, and a thickness of the outer insulation layer was 110 µm, that is, a total thickness of the insulation layer was 120 µm.

### Example 9

This example adopted the method in Example 4, in which the outer insulation layer was prepared by a blended material of PEEK and PEK-C. In the blended material, the PEK-C accounted for 49% by weight, and the remainder was PEEK. A thickness of the base layer made of the PEK-C of the extruded wire was 10 µm, and a thickness of the outer insulation layer was 110 µm, that is, a total thickness of the insulation layer was 120 µm.

### Comparative Example 1

An insulated wire was prepared following the same method as in Example 1, except that no base layer was extruded. The outer insulation layer made of PEEK was directly coated onto the metal conductor, and a thickness of the outer insulation layer made of the PEEK was 100 µm, that is, a total thickness of the insulation layer was 100 µm.

### Comparative Example 2

An insulated wire was prepared following the same method as in Example 1, except that a thickness of the base layer made of the PEK-C was 15 µm, and a thickness of the outer insulation layer made of the PEEK was 85 µm, that is, a total thickness of the insulation layer was 100 µm.

### Comparative Example 3

An insulated wire was prepared following the same method as in Example 1, except that a thickness of the base layer made of the PEK-C was 20 µm, and a thickness of the outer insulation layer made of the PEEK was 80 µm, that is, a total thickness of the insulation layer was 100 µm.

### Comparative Example 4

An insulated wire was prepared following the same method as in Example 1, except that a thickness of the base layer made of the PEK-C was 25 µm, and a thickness of the outer insulation layer made of the PEEK was 75 µm, that is, a total thickness of the insulation layer was 100 µm.

### Comparative Example 5

This example adopted the method in Example 4, in which the outer insulation layer was prepared by a blended material of PEEK and PEK-C. In the blended material, the PEK-C accounted for 60% by weight, and the remainder was PEEK. A thickness of the base layer made of the PEK-C of the extruded wire was 10 µm, and a thickness of the outer insulation layer was 110 µm, that is, a total thickness of the insulation layer was 120 µm.

### Comparative Example 6

This example adopted the method in Example 4, in which the outer insulation layer was prepared by a blended material of PEEK and PEK-C. In the blended material, the PEK-C accounted for 80% by weight, and the remainder was PEEK. A thickness of the base layer made of the PEK-C of the extruded wire was 10 µm, and a thickness of the outer insulation layer was 110 µm, that is, a total thickness of the insulation layer was 120 µm.

### Comparative Example 7

This example adopted the method in Example 4, in which the outer insulation layer was prepared by PEEK. A thickness of the base layer made of the PEK-C of the extruded wire was 10 µm, and a thickness of the outer insulation layer was 110 µm, that is, a total thickness of the insulation layer was 120 µm.

### Performance test

The insulated wires prepared in Examples 1-9 and Comparative Examples 1-7 were subjected to the following tests:

### 1. Adhesion test

The adhesion test was carried out in accordance with Test Method 8 in IEC 60851-3:2019, with specific steps as follows:

A 300 mm sample of each insulated wire prepared in the examples and comparative examples was taken. A circle of the sample was cut in a middle position thereof down to the conductor. The sample was then placed between two clamps, the sample and the clamp were placed on a same axis, both ends were clamped for fixation, the sample was then stretched by 15% at a rate of 300 mm/min. The length of the insulation layer of the sample that lost adhesion was then measured.

### 2. Flexibility test

The insulated wires prepared in the examples and comparative examples were subjected to the flexibility test according to the following methods.

The flexibility test was carried out in accordance with Test Method 8 in IEC 60851-3:2019, with specific steps as follows:

Two straight insulated wires, each 500 mm in length, were taken. Each insulated wire was bent 180° ± 2° around a polished test mandrel. One insulated wire was subjected to flat-wise bending (mandrel diameter = N times the wire thickness), and the other insulated wire was subjected to edge-wise bending (mandrel diameter = N times the wire width). In this test, the insulated wires with a smooth surface and without visible cracks after flat-wise bending and edge-wise bending were rated as "qualified," and wires with surface cracks were rated as "Unqualified."

**Table 1: Properties of composite wire with PEK-C base layer and PEEK outer insulation layer**

| | Total thickness of insulation layer (µm) | Thickness of base layer (µm) | Thickness of outer insulation layer (µm) | Length losing the adhesion (mm) | Flexibility test (N=1) | Flexibility test (N=2) |
|---|---|---|---|---|---|---|
| **Example 1** | 100 | 8 | 92 | 0.73 | Qualified | Qualified |
| **Example 2** | 120 | 10 | 110 | 0.64 | Qualified | Qualified |
| **Example 3** | 80 | 5 | 75 | 0.51 | Qualified | Qualified |
| **Comparative Example 1** | 100 | 0 | 100 | 3.2 | Unqualified | Unqualified |
| **Comparative Example 2** | 100 | 15 | 85 | 0.61 | Unqualified | Qualified |
| **Comparative Example 3** | 100 | 20 | 80 | 0.58 | Unqualified | Unqualified |
| **Comparative Example 4** | 100 | 25 | 75 | 0.52 | Unqualified | Unqualified |

**Table 2: Properties of composite wire with PEK-C base layer and outer insulation layer made of PEEK and PEK-C blended material**

| | Total thickness of insulation layer (µm) | Thicknes s of base layer (µm) | Outer insulation layer | | | | Length losing the adhesion (mm) | Flexibility test (N=1) | Flexibility test (N=2) |
|---|---|---|---|---|---|---|---|---|---|
| | | | Thickness (µm) | PEEK mass percentage (%) | PEK-C mass percentage (%) | Crystall -inity (%) | | | |
| **Example 4** | 120 | 10 | 110 | 90 | 10 | 26 | 0.61 | Qualified | Qualified |
| **Example 5** | 120 | 10 | 110 | 95 | 5 | 28 | 0.59 | Qualified | Qualified |
| **Example 6** | 80 | 5 | 75 | 80 | 20 | 23 | 0.49 | Qualified | Qualified |
| **Example 7** | 100 | 8 | 92 | 70 | 30 | 20 | 0.58 | Qualified | Qualified |
| **Example 8** | 120 | 10 | 110 | 60 | 40 | 17 | 0.52 | Qualified | Qualified |
| **Example 9** | 120 | 10 | 110 | 51 | 49 | 15 | 0.49 | Qualified | Qualified |
| **Comparative Example 5** | 120 | 10 | 110 | 40 | 60 | 12 | 0.47 | Unqualifi -ed | Qualified |
| **Comparative Example 6** | 120 | 10 | 110 | 20 | 80 | 6 | 0.42 | Unqualifi -ed | Unqualifi -ed |
| **Comparative Example 7** | 120 | 10 | 110 | 100 | 0 | 29 | 4.65 | Unqualifi -ed | Unqualifi -ed |

It can be seen from the above examples that adding PEK-C to PEEK can effectively compensate for the lack of flexibility. The thickness of the base layer is preferably less than 10 µm. Experimental results show that an excessively thick PEK-C layer tends to result in insufficient elongation at break of the insulation layer, thereby reducing adhesion. PEK-C does not undergo phase transitions at high temperatures and has a lower coefficient of thermal expansion, so it has good adhesion to copper. Using PEK-C as the outer insulation layer can enhance the adhesion of the insulated wire. In addition, both PEK-C and PEEK belong to the polyaryl ether ketone (PAEK) family, and have good compatibility. The second layer uses a blended material of PEK-C and PEEK to improve the overall flexibility of the outer insulation layer. Moreover, due to the low friction coefficient of PEK-C, the insulated wire can exhibit a lower static friction coefficient, which facilitates insertion into the stator.

In terms of the processing method, the base layer of the present invention is formed by extrusion, which is not only highly efficient but is also environmentally friendly. Moreover, this method causes less damage to the conductor. In the prior art, the conductor needs to be coated with a plurality of coatings, followed by repeated baking and cooling to form the base layer. During this process, the conductor undergoes multiple rounds of heating and cooling shocks, which inevitably degrades its performance. In addition, multiple coating steps can result in inconsistent baking across layers. The innermost layer undergoes the longest baking duration, while the outermost layer is baked for the shortest duration. As a result, the innermost layer has the risk and disadvantage of over-baking, while the outermost layer may be insufficiently baked. In the present invention, the base layer and the outer insulation layer are extruded at the same time, which avoids imposing additional thermal or mechanical stress on the conductor.

Various technical features of the embodiments mentioned above may be arbitrarily combined. In order to simplify the description, all possible combinations of the various features of the embodiments mentioned above are not described. However, if only the combinations of these technical features do not conflict, they should be considered to be within the scope of description of the present invention.

The embodiments mentioned above are merely several embodiments of the present invention, and are specifically described in details, but cannot be interpreted as limiting the scope of the patent for the present invention as a result. It shall be noted that for those of ordinarily skilled in the art, they may make several transformations and improvements on the premise without deviating from concepts of the present invention, these transformations and improvements should be considered to fall within the protection scope of the present invention. Hence, the protection scope of the patent for the present invention should be subject to the appended claims.

## Claims

1. An insulated wire, **characterized by** comprising: a conductor, and a base layer and an outer insulation layer in sequence arranged on an outer periphery of the conductor, wherein the base layer is made of phenolphthalein-based polyaryl ether ketone, PEK-C, and the PEK-C has a repeating structural unit as shown in Formula 1: 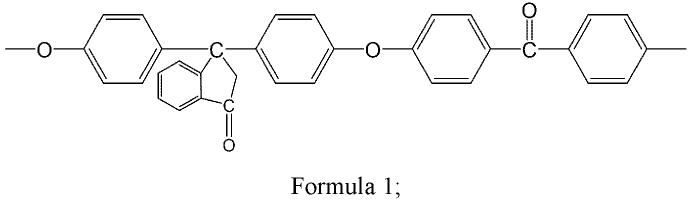
along an outward direction from the conductor, a thickness of the base layer is not greater than 10 µm; and
the outer insulation layer is made of a blended resin, which is obtained by blending and pelletizing polyether ether ketone, PEEK, and PEK-C, wherein a mass ratio of the PEK-C in the outer insulation layer is not greater than 50%.

2. The insulated wire of claim 1, **characterized in that** a crystallinity of the blended resin of the outer insulation layer is not less than 10%.

3. The insulated wire of claim 2, **characterized in that** the crystallinity of the blended resin of the outer insulation layer is 20-28%.

4. A preparation method of the insulated wire of any one of claims 1-3, **characterized in that** the insulated wire is prepared by extrusion, and the preparation method comprises the following steps:
heating a resin for a base layer to a temperature of 370-400 ° C, to achieve a molten state,
extruding the resin material for the base layer through a first flow channel of a screw extruder, to form a uniform coating over a copper conductor, thereby obtaining a core wire;
heating a resin for an outer insulation layer to a temperature of 370-400 ° C, to achieve a molten state,
extruding the resin material for the outer insulation layer through a second flow channel of the screw extruder, to form a uniform coating over the core wire,
cooling and obtaining the insulated wire .

5. A coil, **characterized in that** the coil is formed from the insulated wire of any one of claims 1-3.

6. An electronic/electrical device, **characterized by** comprising the coil of claim 5.
